# EUROPEAN PATENT APPLICATION

(11) **EP 3 598 663 A1**
(43) Date of publication of application: **22.01.2020**
(21) Application number: 18184759.1
(22) Date of filing: 20.07.2018
(51) Int. Cl.: H04B 7/185, H04H 40/90, H04L 12/28

(54) **METHOD FOR PROVIDING TELECOMMUNICATION SERVICES TO AT LEAST ONE CLIENT DEVICE AT CUSTOMER PREMISES USING BOTH A SATELLITE COMMUNICATION SYSTEM AND A MOBILE COMMUNICATION NETWORK, SYSTEM FOR PROVIDING TELECOMMUNICATION SERVICES, PROGRAM AND COMPUTER-READABLE MEDIUM**

(71) Applicant: Deutsche Telekom AG, 53113 Bonn (DE)
(72) Inventor: SCHOLL, Bernhard, 52074 Aachen (DE); DANTINGER, Stefan, 40699 Erkrath (DE); HEGEDÜS, Sándor, 1161 Budapest (HU); SZÜCS, Ferenc, 2030 Érd (HU); MODER, István, 1183 Budapest (HU)
(74) Representative: Schwöbel, Thilo K.

(57) **Abstract**

The invention relates to a method for providing telecommunication services to at least one client device at customer premises using both a satellite communication system and a mobile communication network, a customer premises equipment being located inside of the customer premises and a customer premises communication device being located at the outside of the customer premises,
wherein the satellite communication system comprises a satellite, and a satellite receiver functionality is able to receive satellite radio frequency signals, wherein the mobile communication network comprises a base station entity and a user equipment connected to the mobile communication network and associated to the customer premises, wherein the customer premises communication device comprises the satellite receiver functionality and at least a mobile communication antenna functionality,
wherein a coaxial cable - connecting the customer premises equipment either with the customer premises communication device or with a combiner device being connected to the customer premises communication device - is used to combine signals of the satellite communication system and the mobile communication network, wherein the method comprises the steps of:
-- in a first step, satellite radio frequency downlink signals are received, from the satellite, by the satellite receiver functionality,
-- in a second step, prior, during and/or subsequent to the first step, mobile communication radio frequency downlink signals are received, from the base station entity, by the mobile communication antenna functionality,
-- in a third step, prior, during and/or subsequent to the first and/or the second step, mobile communication radio frequency uplink signals are transmitted by the mobile communication antenna functionality to the base station entity of the mobile communication network,
wherein telecommunication services are provided - to the at least one client device being connected to the customer premises equipment - by means of receiving downlink communication signals by the customer premises equipment and by transmitting uplink communication signals from the customer premises equipment, wherein - by means of using the coaxial cable - the customer premises equipment receives the downlink communication signals from and transmits the uplink communication signals to either the customer premises communication device or the combiner device.

## Description

### BACKGROUND

The present invention relates to a method for providing telecommunication services to at least one client device at customer premises using both a satellite communication system and a mobile communication network, wherein a customer premises equipment is located inside of the customer premises and a customer premises communication device is located at the outside of the customer premises, wherein the satellite communication system comprises a satellite, and a satellite receiver functionality is able to receive satellite radio frequency signals, wherein the mobile communication network comprises a base station entity and a user equipment connected to the mobile communication network and associated to the customer premises, wherein the customer premises communication device comprises the satellite receiver functionality and at least a mobile communication antenna functionality.

Furthermore, the present invention relates to a system for providing telecommunication services to at least one client device at customer premises using both a satellite communication system and a mobile communication network, the system comprising a customer premises equipment being located inside of the customer premises, and the system comprising a customer premises communication device being located at the outside of the customer premises,
wherein the system comprises a satellite receiver functionality being able to receive radio frequency signals from a satellite of the satellite communication system, wherein the system comprises, associated to the customer premises, a user equipment functionality being able to communicate with the mobile communication network comprising a base station entity, wherein the customer premises communication device comprises the satellite receiver functionality and at least a mobile communication antenna functionality.

Furthermore, the present invention relates to a program and to a computer-readable medium for providing telecommunication services to at least one client device at customer premises using both a satellite communication system and a mobile communication network.

The present invention generally relates to the area of providing telecommunication services to client devices, such as TV sets, computers, tablet computers, etc. that are located at customer premises, e.g. individual homes. Especially in rural areas, a broadband connection for a connectivity product providing the possibility to realize broadband internet access, television, and telephone (also called triple play product) is often not available due to the comparatively high costs of the deployment of adequate DSL lines.

### SUMMARY

An object of the present invention is to provide an effective, simple and comparatively cheap solution such that telecommunication services can be provided to client devices at customer premises using both a satellite communication system and a mobile communication network.

The object of the present invention is achieved by a method for providing telecommunication services to at least one client device at customer premises using both a satellite communication system and a mobile communication network, wherein a customer premises equipment is located inside of the customer premises and a customer premises communication device is located at the outside of the customer premises, wherein the satellite communication system comprises a satellite, and a satellite receiver functionality is able to receive satellite radio frequency signals, wherein the mobile communication network comprises a base station entity and a user equipment connected to the mobile communication network and associated to the customer premises, wherein the customer premises communication device comprises the satellite receiver functionality and at least a mobile communication antenna functionality, wherein a coaxial cable - connecting the customer premises equipment either with the customer premises communication device or with a combiner device being connected to the customer premises communication device - is used to combine signals of the satellite communication system and the mobile communication network, wherein the method comprises the steps of:
-- in a first step, satellite radio frequency downlink signals are received, from the satellite, by the satellite receiver functionality,
-- in a second step, prior, during and/or subsequent to the first step, mobile communication radio frequency downlink signals are received, from the base station entity, by the mobile communication antenna functionality,
-- in a third step, prior, during and/or subsequent to the first and/or the second step, mobile communication radio frequency uplink signals are transmitted by the mobile communication antenna functionality to the base station entity of the mobile communication network,
wherein telecommunication services are provided - to the at least one client device being connected to the customer premises equipment - by means of receiving downlink communication signals by the customer premises equipment and by transmitting uplink communication signals from the customer premises equipment, wherein - by means of using the coaxial cable - the customer premises equipment receives the downlink communication signals from and transmits the uplink communication signals to either the customer premises communication device or the combiner device.

According to the present invention, it is advantageously possible to provide an appropriate solution for a connectivity product providing the possibility to realize broadband internet access, television, and telephone (also called triple play product) which combines Satellite TV and an LTE fixed line replacement product.

According to the present invention, the solution mechanically combines the antenna setup, the cabling as well as the LNB (low-noise block downconverter), combining this with an LTE receiver and an LTE settop box (or customer premises equipment) in combination with a WLAN router functionality. It is especially advantageous that for the end customer, the installation cost can be minimized and in addition the LTE connectivity and the experienced broadband functionality can be maximized. As satellite TV is widely used in rural areas (due to not always having the availability of fixed broadband access solutions in such areas), the combination of a satellite TV solution with an LTE broadband solution is capable of reducing overall costs of broadband experience. According to the present invention - as the customer premises communication device (being connected to a customer premises equipment located inside of the customer premises or house) is located at the outside of the customer premises - it is advantageously possible to provide much better LTE performance as an outdoor antenna has a much better link budget compared to an standard LTE indoor router in the house. According to the present invention, it is especially advantageous to combine the broadcast satellite TV functionality with a dedicated channel for interactive services. In the context of the present invention, the customer premises equipment can be combined with or can comprise the functionality of a settop box.

According to the present invention, both a satellite communication system and a mobile communication network is used to provide telecommunication services to at least one client device at customer premises, typically an individual house or apartment. Preferably, not only one client device receives such telecommunication services but a plurality of client devices such as TV sets, audio and/or video streaming devices, mobile phones and/or computing devices. In order to provide the telecommunication services, a customer premises equipment and a customer premises communication device is used, the customer premises equipment being located inside of the customer premises and the customer premises communication device being located at the outside of the customer premises. The satellite communication system comprises a satellite, and a satellite receiver functionality is able to receive satellite radio frequency signals. The mobile communication network comprises a base station entity, and a user equipment is connected to the mobile communication network and associated to the customer premises such as to be able to communicate. The customer premises communication device comprises the satellite receiver functionality and at least a mobile communication antenna functionality for communicating with the mobile communication network.

According to variants of the present invention, the customer premises equipment and the customer premises communication device are either linked or connected directly with each other, or, according to further variants, the customer premises equipment and the customer premises communication device are linked via a combiner device being connected to the customer premises communication device (i.e. in this latter case, the customer premises equipment and the combiner device are directly connected, and the combiner device is connected to the customer premises communication device). Hence, according variants of the present invention, a coaxial cable connects the customer premises equipment with the customer premises communication device, and according to another variants of the present invention, a coaxial cable connects the customer premises equipment and the combiner device (being itself connected to the customer premises communication device). According to all these mentioned variants, the coaxial cable is used to combine signals of the satellite communication system, and of the mobile communication network, and by means of using the customer premises communication device, .
According to the present invention, satellite radio frequency downlink signals are received (in a first step), from the satellite, by the satellite receiver functionality of the customer premises communication device, and
mobile communication radio frequency downlink signals (i.e. signals of the mobile communication network) are received (in a second step, prior, during and/or subsequent to the first step), from the base station entity, by the mobile communication antenna functionality, and
mobile communication radio frequency uplink signals are transmitted (in a third step, prior, during and/or subsequent to the first and/or the second step) by the mobile communication antenna functionality to the base station entity of the mobile communication network.
The telecommunication services are provided - to the at least one client device being connected to the customer premises equipment - by means of the customer premises equipment receiving - by means of using the coaxial cable - downlink communication signals and by means of the customer premises equipment transmitting - likewise by means of using the coaxial cable - uplink communication signals. Either the customer premises equipment receives the downlink communication signals from the customer premises communication device and transmits the uplink communication signals to the customer premises communication device, or the customer premises equipment receives the downlink communication signals from the combiner device and transmits the uplink communication signals to the combiner device.
The downlink communication signals (received by the customer premises equipment) comprise the satellite radio frequency downlink signals and the mobile communication radio frequency downlink signals, i.e. the satellite radio frequency downlink signals and the mobile communication radio frequency downlink signals are combined (in the coaxial cable) and transmitted to the customer premises equipment as the downlink communication signals. Likewise, the uplink communication signals are transmitted, by the customer premises equipment, to either the customer premises communication device or the combiner device (also using the coaxial cable).

The mobile access networks include all kinds of wireless connections, i.e. air interfaces, such as 2G, 3G, 4G, 5G mobile communication networks.

According to a preferred embodiment of the present invention, the client devices are located at or near the customer premises and are connected to the customer premises equipment via a wireline communication link or via a wireless communication link,
wherein especially the mobile communication radio frequency uplink and downlink signals are used for providing telecommunication services comprising interactive functionality or for providing the interactive parts of telecommunication services,
wherein especially the mobile communication antenna functionality and the user equipment connected to the mobile communication network are realized according to or capable of using long term evolution (LTE) radio access technology.

Thereby, it is advantageously possible according to the present invention that the client devices can be used and are connectable to the customer premises equipment in a flexible and convenient manner, especially using either a wireline communication link or a wireless communication link to the customer premises equipment.

According to a further preferred embodiment of the present invention,
-- the customer premises communication device or the combiner device or the customer premises equipment comprises a user equipment functionality towards the mobile communication network, and/or
-- the customer premises communication device comprises a repeater functionality, especially for mobile communication radio frequency downlink and/or uplink signals, towards the combiner device and the combiner device comprising the user equipment functionality, or
-- the customer premises communication device comprises a repeater functionality, especially for mobile communication radio frequency downlink and/or uplink signals, towards the customer premises equipment and the customer premises equipment comprising the user equipment functionality, or
-- the combiner device comprises a repeater functionality, especially for mobile communication radio frequency downlink and/or uplink signals, towards the customer premises equipment and the customer premises equipment comprising the user equipment functionality.

By means of either the customer premises communication device, or the combiner device, or the customer premises equipment comprising a user equipment functionality towards the mobile communication network, it is advantageously possible according to the present invention that the customer premises communication device acts as a user equipment towards the mobile communication network, or that the combiner device acts as a user equipment towards the mobile communication network, or that the customer premises equipment acts as a user equipment towards the mobile communication network - thereby providing a connection to the mobile communication network (typically using a base station entity).
By means of providing a repeater functionality, especially for mobile communication radio frequency downlink and/or uplink signals, in either the customer premises communication device or the combiner device, it is advantageously possible that the user equipment functionality can be provided outside of the customer premises communication device and integrated in either the combiner device or the customer premises equipment.

According to still a further preferred embodiment of the present invention, the customer premises communication device is an integrated device comprising
-- both the satellite receiver functionality and at least the mobile communication antenna functionality, or
-- both the satellite receiver functionality and the user equipment functionality,
wherein especially the customer premises communication device and/or the combiner device comprises an amplifier, especially a low noise amplifier, in order to amplify especially the satellite radio frequency downlink signals and/or the mobile communication radio frequency uplink and/or downlink signals.

Thereby, it is advantageously possible according to the present invention that the customer premises communication device can be easily installed and used by an end user.

According to still a further preferred embodiment of the present invention, the customer premises equipment comprises a hybrid access functionality, and - besides its connection, via the coaxial cable as a first physical interface, to the customer premises communication device or to the combiner device - a second physical interface, the second physical interface providing fixed line broadband access (or connectivity) to the customer premises equipment.

Thereby, it is advantageously possible according to the present invention that broadband access is able to be provided to the customer premises equipment using both the first physical interface via the coaxial cable (to or from either the customer premises communication device or the combiner device), or the second physical interface.

Furthermore, the present invention relates to a system for providing telecommunication services to at least one client device at customer premises using both a satellite communication system and a mobile communication network, the system comprising a customer premises equipment being located inside of the customer premises, and the system comprising a customer premises communication device being located at the outside of the customer premises,
wherein the system comprises a satellite receiver functionality being able to receive radio frequency signals from a satellite of the satellite communication system, wherein the system comprises, associated to the customer premises, a user equipment functionality being able to communicate with the mobile communication network comprising a base station entity, wherein the customer premises communication device comprises the satellite receiver functionality and at least a mobile communication antenna functionality, wherein the system is configured such that a coaxial cable - connecting the customer premises equipment either with the customer premises communication device or with a combiner device being connected to the customer premises communication device as part of the system - is used to combine signals of the satellite communication system and

the mobile communication network, wherein the system is furthermore configured such that:
-- satellite radio frequency downlink signals are received, from the satellite, by the satellite receiver functionality,
-- mobile communication radio frequency downlink signals are received, from the base station entity, by the mobile communication antenna functionality,
-- mobile communication radio frequency uplink signals are transmitted by the mobile communication antenna functionality to the base station entity of the mobile communication network,
wherein telecommunication services are provided - to the at least one client device being connected to the customer premises equipment - by means of receiving downlink communication signals by the customer premises equipment and by transmitting uplink communication signals from the customer premises equipment, wherein - by means of using the coaxial cable - the customer premises equipment receives the downlink communication signals from and transmits the uplink communication signals to either the customer premises communication device or the combiner device.

Thereby, it is advantageously possible to provide a system that is capable of providing the possibility to realize broadband internet access, television, and telephone which combines Satellite TV and an LTE fixed line replacement product.

Especially with regard to the inventive system, it is preferred that
-- the customer premises communication device or the combiner device or the customer premises equipment comprises a user equipment functionality towards the mobile communication network, and/or
-- the customer premises communication device comprises a repeater functionality, especially for mobile communication radio frequency downlink and/or uplink signals, towards the combiner device and the combiner device comprising the user equipment functionality, or
-- the customer premises communication device comprises a repeater functionality, especially for mobile communication radio frequency downlink and/or uplink signals, towards the customer premises equipment and the customer premises equipment comprising the user equipment functionality, or
-- the combiner device comprises a repeater functionality, especially for mobile communication radio frequency downlink and/or uplink signals, towards the customer premises equipment and the customer premises equipment comprising the user equipment functionality.

Thereby, it is advantageously possible according to the present invention that the customer premises communication device acts as a user equipment towards the mobile communication network, or that the combiner device acts as a user equipment towards the mobile communication network, or that the customer premises equipment acts as a user equipment towards the mobile communication network.
By means of providing a repeater functionality, especially for mobile communication radio frequency downlink and/or uplink signals, in either the customer premises communication device or the combiner device, it is advantageously possible that the user equipment functionality can be provided outside of the customer premises communication device and integrated in either the combiner device or the customer premises equipment.

According to the present invention it is furthermore preferred - especially with respect to the inventive system - that the customer premises communication device is an integrated device comprising
-- both the satellite receiver functionality and at least the mobile communication antenna functionality, or
-- both the satellite receiver functionality and the user equipment functionality,
wherein especially the customer premises communication device and/or the combiner device comprises an amplifier, especially a low noise amplifier, in order to especially amplify the satellite radio frequency downlink signals and/or the mobile communication radio frequency uplink and/or downlink signals.

Additionally, the present invention relates to a program comprising a computer readable program code which, when executed on a computer or on a customer premises equipment or on a customer premises communication device or on a combiner device, or in part on the customer premises equipment and/or in part on the customer premises communication device and/or in part on the combiner device, causes the computer or the customer premises equipment or the customer premises communication device or the combiner device to perform a method according to the present invention.

Still additionally, the present invention relates to a computer-readable medium comprising instructions which, when executed on a computer or on a customer premises equipment or on a customer premises communication device or on a combiner device, or in part on the customer premises equipment and/or in part on the customer premises communication device and/or in part on the combiner device, causes the computer or the customer premises equipment or the customer premises communication device or the combiner device to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

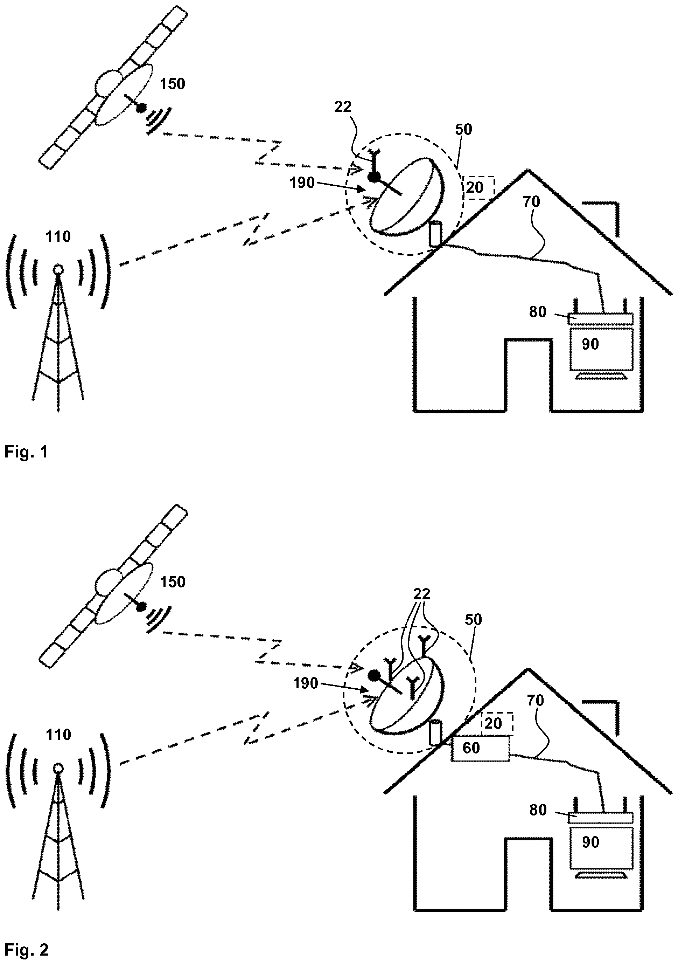

**Figure 1** schematically illustrates a system according to a variant of the present invention, comprising a customer premises equipment being located inside of customer premises and a customer premises communication device being located at the outside of the customer premises, the customer premises communication device comprising a satellite receiver functionality and at least a mobile communication antenna functionality, and wherein telecommunication services are able to be provided to at least one client device connected to the customer premises equipment.

**Figure 2** schematically illustrates a system according to a further variant of the present invention, comprising a customer premises equipment being located inside of customer premises and a customer premises communication device being located at the outside of the customer premises, the customer premises communication device comprising a satellite receiver functionality and at least a mobile communication antenna functionality, wherein the customer premises communication device is connected to the customer premises equipment via a combiner device, and wherein telecommunication services are able to be provided to at least one client device connected to the customer premises equipment.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a system according to a variant of the present invention is schematically shown, the system comprising a customer premises equipment 80 being located inside of customer premises and a customer premises communication device 50 being located at the outside of the customer premises, the customer premises communication device 50 comprising a satellite receiver functionality 190 and at least a mobile communication antenna functionality 22, and wherein telecommunication services are able to be provided to at least one client device 90 connected to the customer premises equipment 80. The inventive system is used to provide telecommunication services to at least the one client device 90, typically located at the customer premises, using both a satellite communication system and a mobile communication network. The satellite communication system comprises a satellite 150 transmitting satellite radio frequency downlink signals that are received by the satellite receiver functionality 190 of the customer premises communication device 50. The mobile communication network comprises at least one base station entity 110 (typically the mobile communication network comprises a plurality of base station entities, one of which is schematically shown in Figure 1). According to the present invention, a user equipment 20 (or a user equipment functionality) is realized within either the customer premises communication device 50 or within the customer premises equipment 80, the user equipment 20 (or the user equipment functionality) being able to be connected to the mobile communication network (while being associated to the customer premises) in order to exchange (i.e. transmit and receive) mobile communication radio frequency signals with the base station entity 110 via the (or using the) mobile communication antenna functionality 22 of the customer premises communication device 50. The user equipment 20 (or the user equipment functionality 20) is represented in Figure 1 by means of a dashed line and in connection to (or integrated in) the customer premises communication device 50. According to another variant of the inventive system shown in Figure 1, which variant is, however, not shown in Figure 1, the user equipment 20 (or the user equipment functionality 20) is associated with (or integrated in) the customer premises equipment 80.
According to the variant of the present invention shown in Figure 1, a coaxial cable 70 - connecting the customer premises equipment 80 with the customer premises communication device 50 - is used to combine signals (i.e. radio frequency signals) of the satellite communication system and the mobile communication network.

In Figure 2, a system according to a further variant of the present invention is schematically shown, the system comprising the customer premises equipment 80, likewise being located inside of customer premises and the customer premises communication device 50 being located at the outside of the customer premises, the customer premises communication device 50 comprising the satellite receiver functionality 190 and a plurality of mobile communication antenna functionalities 22 (but at least one mobile communication antenna functionalities 22). In contrast to the variant of the inventive system shown in Figure 1, the customer premises communication device 50 according to the variant shown in Figure 2 is connected to the customer premises equipment 80 via a combiner device 60, typically located close to the roof top of the customer premises. The inventive system is used to provide telecommunication services to at least the one client device 90, typically located at the customer premises, using both the satellite communication system and the mobile communication network. In a manner analogous to the representation in Figure 1, the satellite communication system comprises a satellite 150 transmitting satellite radio frequency downlink signals that are received by the satellite receiver functionality 190 of the customer premises communication device 50, and the mobile communication network comprises at least one base station entity 110 (typically the mobile communication network comprises a plurality of base station entities, one of which is schematically shown in Figure 1). According to the variant shown in Figure 2, the user equipment 20 (or a user equipment functionality) is realized within either the customer premises communication device 50 or within the combiner device 60 or within the customer premises equipment 80, the user equipment 20 (or the user equipment functionality) being able to be connected to the mobile communication network (while being associated to the customer premises) in order to exchange (i.e. transmit and receive) mobile communication radio frequency signals with the base station entity 110 via the (or using the) mobile communication antenna functionality 22 of the customer premises communication device 50 (or via the plurality of mobile communication antenna functionality 22). The user equipment 20 (or the user equipment functionality 20) is represented in Figure 2 by means of a dashed line and in connection to (or integrated in) the combiner device 60. According to further variants of the inventive system shown in Figure 2, which variants are, however, not shown in Figure 2, the user equipment 20 (or the user equipment functionality 20) is associated with (or integrated in) either the customer premises equipment 80 or the customer premises communication device 50.

According to the variant of the present invention shown in Figure 2, the coaxial cable 70 - connecting the customer premises equipment 80 with the combiner device 60 - is used to combine signals (i.e. radio frequency signals) of the satellite communication system and the mobile communication network.

According to the variants of the present invention,
-- satellite radio frequency downlink signals are received, from the satellite 150, by the satellite receiver functionality 190,
-- mobile communication radio frequency downlink signals are received, from the base station entity 110, by the mobile communication antenna functionality 22, and
   mobile communication radio frequency uplink signals are transmitted by the mobile communication antenna functionality 22 to the base station entity 110 of the mobile communication network.
   Furthermore, the telecommunication services are provided - to the at least one client device 90 being connected to the customer premises equipment 80 - by means of the customer premises equipment 80 receiving - by means of using the coaxial cable 70 - downlink communication signals and by means of the customer premises equipment 80 transmitting - likewise by means of using the coaxial cable 70 - uplink communication signals. Either (according to the variant of the inventive system shown in Figure 1) the customer premises equipment 80 receives the downlink communication signals from the customer premises communication device 50 and transmits the uplink communication signals to the customer premises communication device 50, or (according to the variant of the inventive system shown in Figure 2) the customer premises equipment 80 receives the downlink communication signals from the combiner device 60 and transmits the uplink communication signals to the combiner device 60.
   According to all the variants according to the present invention, the downlink communication signals (received by the customer premises equipment 80) comprise the satellite radio frequency downlink signals and the mobile communication radio frequency downlink signals, i.e. the satellite radio frequency downlink signals and the mobile communication radio frequency downlink signals are combined (in the coaxial cable 70) and transmitted to the customer premises equipment 80 as the downlink communication signals. Likewise, the uplink communication signals are transmitted, by the customer premises equipment 80, to either the customer premises communication device 50 (according to the variant of the inventive system shown in Figure 1) or the combiner device (according to the variant of the inventive system shown in Figure 2), also using the coaxial cable 70.

Hence, according to the different embodiments of the present invention, the proposed solution consists of a combined satellite and LTE outdoor antenna, i.e. the satellite receiver functionality 190 and the mobile communication antenna functionality 22. The customer premises communication device 50 (comprising the satellite receiver functionality 190 and the mobile communication antenna functionality 22) is also called LNB+ and typically (especially) consists of (or comprises) a low noise blocking filter (as used in a standard satellite receiver) and either an LTE repeater function to amplify both uplink and downlink or an LTE terminal function (i.e. a user equipment 20 or user equipment functionality 20). According to the present invention, the customer premises communication device 50, or LNB+, (and/or the combiner device 60) shall combine both (kinds of) signals (the satellite signal or signals (i.e. the satellite radio frequency downlink signals) as well as the LTE signal or signals, analog or digital (i.e. the mobile communication radio frequency downlink signals)) to use the coaxial cable 70 (typically existing within the customer premises), which is connected to the customer premises equipment 80 (also called set top box, or settopbox+). Thereby, it is advantageously possible to use different frequency ranges (within the coaxial cable 70) for transmitting the satellite signal or signals, on the one hand, and the LTE signal or signals, on the other hand. The customer premises equipment 80 (or settopbox+) according to the present invention can be realized by means of a combination of a satellite receiver (or satellite receiver functionality), a hard disk recorder, and a multimedia entertainment platform (gaming, video-streaming, radio, music streaming), typically in combination with a WLAN router functionality. The LTE signal (i.e. the mobile communication radio frequency downlink and/or uplink signals) are used for any interactive multimedia function as well as for the indoor WLAN service and to connect other equipment (i.e. other client devices 90), especially via Ethernet cable. According to further variants of the present invention, i.e. alternatively or cumulatively, separate LTE antennas (i.e. additional mobile communication antenna functionality 22) are able to be mechanically integrated in the satellite dish, i.e. in the customer premises communication device 50, comprising the satellite receiver functionality 190 and at least one mobile communication antenna functionality 22.
In some embodiments according to the present invention (with a combiner device 60 being present and being connected to the customer premises communication device), the combiner device 60 (or also called combiner+) combines the function of a satellite LNA (low-noise amplifier) or of a satellite LNB (low-noise block downconverter) on the one hand, and, on the other hand, either an LTE repeater function (), or an LTE UE function (or user equipment functionality) and combine the signals on the same coaxial cable 70. As an additional option according to the present invention, it is possible to additionally enable a fixed line connectivity (i.e. a hybrid access of the customer premises equipment 80, also called settopbox+). Within this approach the customer premises equipment 80 (or settopbox+) has a second physical input interface (fixed DSL line or Ethernet Interface which is connected to a specific DSL modem).

According to the present invention, especially the following embodiments are provided:
first embodiment or variant: LNB+ (as a combination of an LNB and an LTE UE function or a user equipment functionality), having
   -- the satellite signal via the satellite antenna, and
   -- the LTE signal via the LTE antenna integrated in the LNB
as an input signal (especially for uplink and/or downlink data), and
   -- the satellite receiver signal, and
   -- an ethernet signal
as an output signal (especially for uplink and/or downlink data), and especially on the coaxial cable;
second embodiment or variant: LNB+ (as a combination of an LNB and an LTE repeater function or a repeater functionality), having
   -- the satellite signal via the satellite antenna, and
   -- the LTE signal via the LTE antenna integrated in the LNB
as an input signal (especially for uplink and/or downlink data), and
   -- the satellite receiver signal, and
   -- the LTE radio frequency signal
as an output signal (especially for uplink and/or downlink data), and especially on the coaxial cable;
third embodiment or variant: Combiner+ (as a combination of an LNA (or an LNB) and an LTE UE function or a user equipment functionality), having
   -- the satellite receiver signal
   -- the LTE signal via the LTE antenna integrated in the LNB (especially with the main advantage that multiple antennae are able to be used to enable even 4x4 MIMO or any directional antenna system)
as an input signal (especially for uplink and/or downlink data), and
   -- the satellite receiver signal (especially amplified), and
   -- an ethernet signal
as an output signal (especially for uplink and/or downlink data), and especially on the coaxial cable;
fourth embodiment or variant: Settop Box in combination with an LNB+ (especially according to the first embodiment) or a Combiner+ (especially according to the third embodiment), having
   -- the satellite receiver signal, and
   -- an (or the) ethernet signal
as an input signal (especially for uplink and/or downlink data), and
   -- a Wi-Fi signal, and/or
   -- an ethernet signal, and/or
   -- a HDMI signal, and/or
   -- further kinds of signals
as an output signal (especially for uplink and/or downlink data);
fifth embodiment or variant: Settop Box in combination with an LNB+ (especially according to the second embodiment), having
   -- the satellite receiver signal, and
   -- the LTE radio frequency signal
as an input signal (especially for uplink and/or downlink data), and
   -- a Wi-Fi signal, and/or
   -- an ethernet signal, and/or
   -- a HDMI signal, and/or
   -- further kinds of signals
as an output signal (especially for uplink and/or downlink data).

## Claims

1. Method for providing telecommunication services to at least one client device (90) at customer premises using both a satellite communication system and a mobile communication network, wherein a customer premises equipment (80) is located inside of the customer premises and a customer premises communication device (50) is located at the outside of the customer premises,
wherein the satellite communication system comprises a satellite (150), and a satellite receiver functionality (190) is able to receive satellite radio frequency signals, wherein the mobile communication network comprises a base station entity (110) and a user equipment (20) connected to the mobile communication network and associated to the customer premises, wherein the customer premises communication device (50) comprises the satellite receiver functionality (190) and at least a mobile communication antenna functionality (22),
wherein a coaxial cable (70) - connecting the customer premises equipment (80) either with the customer premises communication device (50) or with a combiner device (60) being connected to the customer premises communication device (50) - is used to combine signals of the satellite communication system and the mobile communication network, wherein the method comprises the steps of:
-- in a first step, satellite radio frequency downlink signals are received, from the satellite (150), by the satellite receiver functionality (190),
-- in a second step, prior, during and/or subsequent to the first step, mobile communication radio frequency downlink signals are received, from the base station entity (110), by the mobile communication antenna functionality (22),
-- in a third step, prior, during and/or subsequent to the first and/or the second step, mobile communication radio frequency uplink signals are transmitted by the mobile communication antenna functionality (22) to the base station entity (110) of the mobile communication network,
wherein telecommunication services are provided - to the at least one client device (90) being connected to the customer premises equipment (80) - by means of receiving downlink communication signals by the customer premises equipment (80) and by transmitting uplink communication signals from the customer premises equipment (80), wherein - by means of using the coaxial cable (70) - the customer premises equipment (80) receives the downlink communication signals from and transmits the uplink communication signals to either the customer premises communication device (50) or the combiner device (60).

2. Method according to claim 1, wherein the client devices (90) are located at or near the customer premises and are connected to the customer premises equipment (80) via a wireline communication link or via a wireless communication link, wherein especially the mobile communication radio frequency uplink and downlink signals are used for providing telecommunication services comprising interactive functionality or for providing the interactive parts of telecommunication services, wherein especially the mobile communication antenna functionality (22) and the user equipment (20) connected to the mobile communication network are realized according to or capable of using long term evolution (LTE) radio access technology.

3. Method according to one of the preceding claims, wherein
-- the customer premises communication device (50) or the combiner device (60) or the customer premises equipment (80) comprises a user equipment (20) functionality towards the mobile communication network, and/or
-- the customer premises communication device (50) comprises a repeater functionality, especially for mobile communication radio frequency downlink and/or uplink signals, towards the combiner device (60) and the combiner device (60) comprising the user equipment (20) functionality, or
-- the customer premises communication device (50) comprises a repeater functionality, especially for mobile communication radio frequency downlink and/or uplink signals, towards the customer premises equipment (80) and the customer premises equipment (80) comprising the user equipment (20) functionality, or
-- the combiner device (60) comprises a repeater functionality, especially for mobile communication radio frequency downlink and/or uplink signals, towards the customer premises equipment (80) and the customer premises equipment (80) comprising the user equipment (20) functionality.

4. Method according to one of the preceding claims, wherein the customer premises communication device (50) is an integrated device comprising
-- both the satellite receiver functionality (190) and at least the mobile communication antenna functionality (22), or
-- both the satellite receiver functionality (190) and the user equipment (20) functionality,
wherein especially the customer premises communication device (50) and/or the combiner device (60) comprises an amplifier, especially a low noise amplifier, in order to amplify especially the satellite radio frequency downlink signals and/or the mobile communication radio frequency uplink and/or downlink signals.

5. Method according to one of the preceding claims, wherein the customer premises equipment (80) comprises a hybrid access functionality, and - besides its connection, via the coaxial cable (70) as a first physical interface, to the customer premises communication device (50) or to the combiner device (60) - a second physical interface providing fixed line broadband access to the customer premises equipment (80).

6. System for providing telecommunication services to at least one client device (90) at customer premises using both a satellite communication system and a mobile communication network, the system comprising a customer premises equipment (80) being located inside of the customer premises, and the system comprising a customer premises communication device (50) being located at the outside of the customer premises,
wherein the system comprises a satellite receiver functionality (190) being able to receive radio frequency signals from a satellite (150) of the satellite communication system, wherein the system comprises, associated to the customer premises, a user equipment (20) functionality being able to communicate with the mobile communication network comprising a base station entity (110), wherein the customer premises communication device (50) comprises the satellite receiver functionality (190) and at least a mobile communication antenna functionality (22),
wherein the system is configured such that a coaxial cable (70) - connecting the customer premises equipment (80) either with the customer premises communication device (50) or with a combiner device (60) being connected to the customer premises communication device (50) as part of the system - is used to combine signals of the satellite communication system and the mobile communication network, wherein the system is furthermore configured such that:
-- satellite radio frequency downlink signals are received, from the satellite (150), by the satellite receiver functionality (190),
-- mobile communication radio frequency downlink signals are received, from the base station entity (110), by the mobile communication antenna functionality (22),
-- mobile communication radio frequency uplink signals are transmitted by the mobile communication antenna functionality (22) to the base station entity (110) of the mobile communication network,
wherein telecommunication services are provided - to the at least one client device (90) being connected to the customer premises equipment (80) - by means of receiving downlink communication signals by the customer premises equipment (80) and by transmitting uplink communication signals from the customer premises equipment (80), wherein - by means of using the coaxial cable (70) - the customer premises equipment (80) receives the downlink communication signals from and transmits the uplink communication signals to either the customer premises communication device (50) or the combiner device (60).

7. System according to claim 6, wherein
-- the customer premises communication device (50) or the combiner device (60) or the customer premises equipment (80) comprises a user equipment (20) functionality towards the mobile communication network, and/or
-- the customer premises communication device (50) comprises a repeater functionality, especially for mobile communication radio frequency downlink and/or uplink signals, towards the combiner device (60) and the combiner device (60) comprising the user equipment (20) functionality, or
-- the customer premises communication device (50) comprises a repeater functionality, especially for mobile communication radio frequency downlink and/or uplink signals, towards the customer premises equipment (80) and the customer premises equipment (80) comprising the user equipment (20) functionality, or
-- the combiner device (60) comprises a repeater functionality, especially for mobile communication radio frequency downlink and/or uplink signals, towards the customer premises equipment (80) and the customer premises equipment (80) comprising the user equipment (20) functionality.

8. System according to claims 6 or 7, wherein the customer premises communication device (50) is an integrated device comprising
-- both the satellite receiver functionality (190) and at least the mobile communication antenna functionality (22), or
-- both the satellite receiver functionality (190) and the user equipment (20) functionality,
wherein especially the customer premises communication device (50) and/or the combiner device (60) comprises an amplifier, especially a low noise amplifier, in order to especially amplify the satellite radio frequency downlink signals and/or the mobile communication radio frequency uplink and/or downlink signals.

9. Program comprising a computer readable program code which, when executed on a computer or on a customer premises equipment (80) or on a customer premises communication device (50) or on a combiner device (60), or in part on the customer premises equipment (80) and/or in part on the customer premises communication device (50) and/or in part on the combiner device (60), causes the computer or the customer premises equipment (80) or the customer premises communication device (50) or the combiner device (60) to perform a method according to one of claims 1 to 5.

10. Computer-readable medium comprising instructions which, when executed on a computer or on a customer premises equipment (80) or on a customer premises communication device (50) or on a combiner device (60), or in part on the customer premises equipment (80) and/or in part on the customer premises communication device (50) and/or in part on the combiner device (60), causes the computer or the customer premises equipment (80) or the customer premises communication device (50) or the combiner device (60) to perform a method according to one of claims 1 to 5.
